# EUROPEAN PATENT SPECIFICATION

(11) **EP 2 936 928 B1**
(45) Date of publication and mention of the grant of the patent: **15.02.2017**
(21) Application number: 13863747.5
(22) Date of filing: 18.12.2013
(51) Int. Cl.: H05B 7/12, H05B 7/105, H05B 7/06, F27B 3/08, C21C 5/52, F27D 11/10, F27D 99/00

(54) **METHOD FOR SEALING OF GAPS IN A CONTACT SHOE RING AND SEALING ARRANGEMENT**
VERFAHREN ZUM ABDICHTEN VON SPALTEN IN EINEM KONTAKTSCHUHRING UND DICHTUNGSANORDNUNG
PROCÉDÉ DE COLMATAGE D'ESPACES DANS UNE BAGUE À SABOTS DE CONTACT ET AGENCEMENT DE COLMATAGE

(30) Priority: 19.12.2012 FI 20126332
(43) Date of publication of application: 28.10.2015
(73) Proprietor: Outotec (Finland) Oy, 02230 Espoo (FI)
(72) Inventor: OLLILA, Janne, FI-02820 Espoo (FI); KERÄNEN, Tapio, FI-02110 Espoo (FI)
(74) Representative: Papula Oy
(86) International application number: PCT/FI2013/051175
(87) International publication number: WO 2014/096540

(56) References cited:
- EP-A2- 1 876 866
- WO-A1-82/04372
- WO-A1-82/04372
- US-A- 2 979 550

## Description

### FIELD OF THE INVENTION

The present invention relates to a method for sealing of gaps in a contact shoe ring. Further, the present invention relates to a sealing arrangement for sealing of gaps in a contact shoe ring.

### BACKGROUND OF THE INVENTION

A contact shoe ring is a part of an electrode lower column assembly of an electrode system of an electric arc furnace. The contact shoe ring is configured to be placed in contact with an electrode to conduct electric current to the electrode. The contact shoe ring comprises a plurality of contact shoe elements. The contact shoe elements are arranged in an annular form to surround the electrode. The contact shoes are pressed against the steel mantle of the electrode with the aid of a plurality of hydraulic bellows arranged in the pressure ring that surrounds the contact shoe ring. Each contact shoe element has two substantially vertical side edges. The adjacent contact shoes in the contact shoe ring are arranged with a substantially vertical gap between the abutting side edges of the adjacent contact shoe elements. The gap is needed to allow adaptation of the contact shoe ring diameter to variation in the diameter of the electrode and because of deformations caused by thermal expansion and because the diameter of the electrode may vary along its length. A refractory sealing arrangement is needed in the gap to prevent a gas leakage to and from the inner atmosphere of the electric arc furnace.

In prior art, the sealing arrangement has been implemented with a castable refractory mass. Castable refractory mass, such as ceramic mass, has been cast to seal the gap. The problem is that after being cured the ceramic mass is not elastic, but instead is hard and brittle. Therefore, the ceramic mass tends to decay and break under the influence of movements of the structures in relation to each other, such movements being caused by forces induced by thermal expansion. After breakage of the ceramic mass, maintenance is needed. The remains of broken mass have to be removed and the casting of the new ceramic mass has to be done.

WO 82/04372 A1 discloses a method and device according to the preambles of claims 1 and 4, for clamping the electrode contact shoes around the electrode of and electric furnace. A suitably formed flat sealing spring seals the gap which remains between contact shoes.

### OBJECTIVE OF THE INVENTION

It is an objective to of the present invention to provide a sealing arrangement which overcomes the above-mentioned drawbacks.

It is an objective of the present invention to provide a sealing arrangement which has an ability to adapt itself to changes of the width of the gap without losing its sealing efficiency.

### SUMMARY OF THE INVENTION

According to a first aspect, the present invention provides a method for sealing of gaps in a contact shoe ring, said contact shoe ring being a subassembly of an electrode lower column assembly of an electrode system of an electric arc furnace, said electrode lower column assembly comprising said contact shoe ring and a pressure ring which surrounds the contact shoe ring, and said contact shoe ring comprising contact shoe elements, each having a first side edge, a second side edge which is substantially parallel with the first side edge, and a side face at the outer periphery facing the pressure ring, each of said gaps being a space between the first side edge of a first contact shoe element and the second side edge of a second contact shoe element which is adjacently neighboring to the first contact shoe element. According to the invention the method comprises the steps of
- folding a refractory fabric to a substantially U-form shape to form a first branch portion and second branch portion which is parallel and at a distance corresponding to the width of the gap in relation to the first branch portion,
- attaching the first branch portion with a refractory glue to the first side edge of the first contact shoe element,
- attaching the second branch portion with a refractory glue to the second side edge of the second contact shoe element,
- inserting at least one refractory felt strip between the first and second branch portions, to fill the space therebetween, and
- attaching a cover strip made of refractory fabric with a refractory glue to the side faces of the first and second contact shoe elements.

According to a second aspect, the present invention provides a sealing arrangement for sealing of gaps in a contact shoe ring, said contact shoe ring being a subassembly of an electrode lower column assembly of an electrode system of an electric arc furnace, said electrode lower column assembly comprising said contact shoe ring and a pressure ring which surrounds the contact shoe ring, and said contact shoe ring comprising contact shoe elements, each having a first side edge, a second side edge which is substantially parallel with the first side edge, and a side face at the outer periphery facing the pressure ring, each of said gaps being a space between the first side edge of a first contact shoe element and the second side edge of a second contact shoe element which is adjacently neighboring to the first contact shoe element. According to the invention the sealing arrangement comprises
- a refractory fabric which is folded to a substantially U-form shape having a first branch portion to be attached in use with refractory glue to the first side edge of the first contact shoe element and a second branch portion to be attached in use with refractory glue to the second side edge of the second contact shoe element,
- at last one refractory felt strip which is arranged between the first and second branch portions, to fill the space therebetween, and
- a cover strip made of refractory fabric attached with refractory glue to the side faces of the first and second contact shoe element.

The advantage of the invention is that the sealing arrangement comprising fabric and felt is inherently resilient and flexible so that it is capable of adapting itself to the movements and thermal expansion and contraction of the contact shoe elements without losing its sealing efficiency. Further, the sealing arrangement is very durable.

In an embodiment of the method, the method comprises a step of arranging a refractory bottom closure to connect the lower ends of the first and second branch portions, to form a support for the refractory felt strip.

In an embodiment of the method, before attaching the cover strip to the side faces of the first and second contact shoe elements, the method comprises steps of
- folding a first edge portion from the first branch portion around a first corner which is the corner between the first side edge and the side face of the first contact shoe element and attaching the first edge portion with a refractory glue to said side face of the first contact shoe element, and
- folding a second edge portion from the second branch portion around a second corner, which is the corner between the second side edge and the side face of the second contact shoe element, to an opposite direction in relation to the first edge portion and attaching the second edge portion with a refractory glue to said side face of the second contact shoe element.

In an embodiment the sealing arrangement comprises a refractory bottom closure connected at the lower ends of first and second branch portions, to form a bottom support for the refractory felt strip.

In an embodiment the refractory fabric comprises
a first edge portion folded from the first branch portion and attached with refractory glue to the side face of the first contact shoe element, and
a second edge portion folded from the second branch portion to an opposite direction in relation to the first edge portion and attached with refractory glue to the side face of the second contact shoe element.

In an embodiment the refractory fabric and/or the cover strip and/or the bottom closure is ceramic fabric or quartz fiber fabric.

In an embodiment the refractory felt strip is ceramic felt.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 is a schematic elevation side view of an electric arc furnace,
Figure 2 is an axonometric view of a lower electrode column assembly,
Figure 3 is a section III-III from Figure 2,
Figure 4 is an exploded axonometric view of the elements of the sealing arrangement according to an embodiment of the invention.

### DETAILED DESCRIPTION OF THE INVENTION

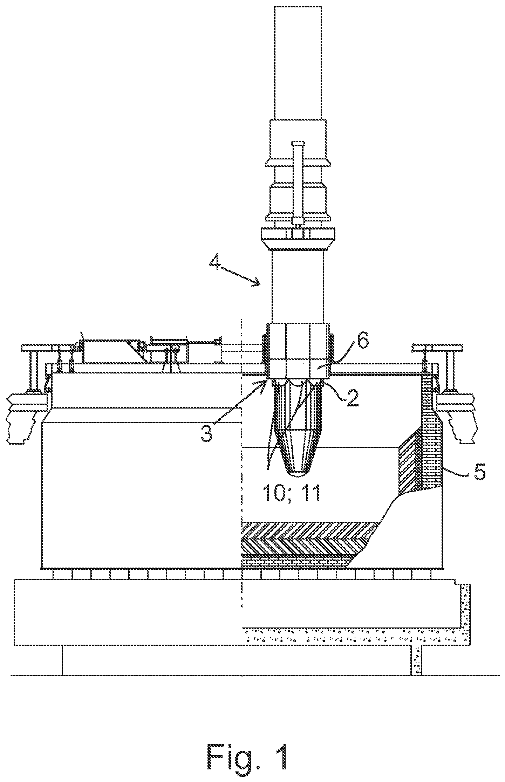

Figure 1 shows a schematic illustration of an electric arc furnace 5. Only one of the three electrode systems 4 is shown for the sake of simplicity.

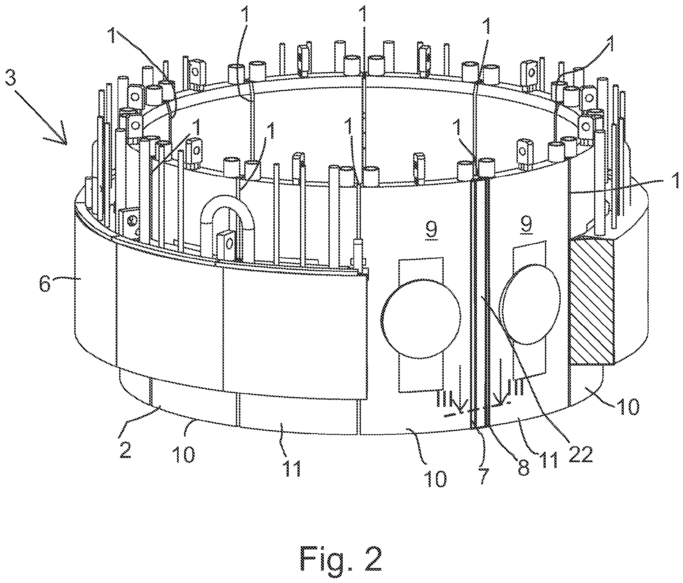

With reference to Figures 1 and 2 an electrode lower column assembly 3 is located in the lower part of the electrode system. The electrode lower column assembly 3 comprises a contact shoe ring 2 and a pressure ring 6. The contact shoe ring 2 is configured to be placed in contact with the electrode to conduct electric current to the electrode. The contact shoe ring 2 comprises a plurality of contact shoe elements 10, 11.

The contact shoe elements are arranged in an annular form to surround the electrode. The contact shoes are pressed against the steel mantle of the electrode with the aid of a plurality of hydraulic bellows arranged in the pressure ring 6 that surrounds the contact shoe ring 2.

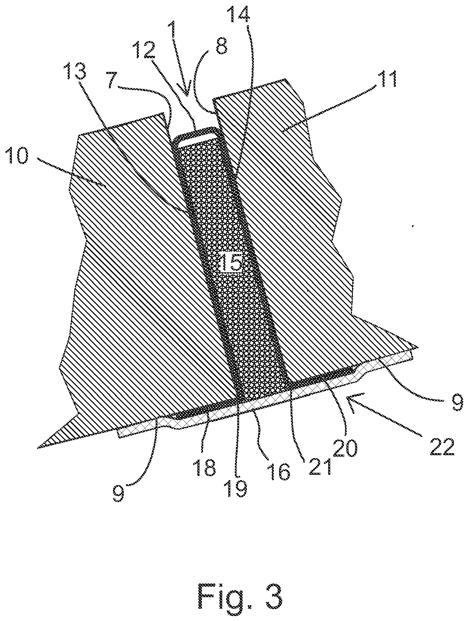

With reference to Figures 2 and 3, the contact shoe elements 10, 11 each have a first side edge 7, a second side edge 8 which is substantially parallel with the first side edge, and a side face 9 at the outer periphery facing the pressure ring 6. Each of the gaps 1 is a space between the first side edge 7 of a first contact shoe element 10 and the second side edge 8 of a second contact shoe element 11 which is adjacently neighboring to the first contact shoe element 10. The gaps 1 are equipped with the sealing arrangement 22, only one of which is shown in Figure 2. The sealing arrangement 22 prevents gas leakages to and from the furnace. The inner atmosphere of the electric arc furnace includes dust and CO gas at a high temperature. Leakage of CO gas out from the furnace is a serious safety hazard and must be effectively prevented.

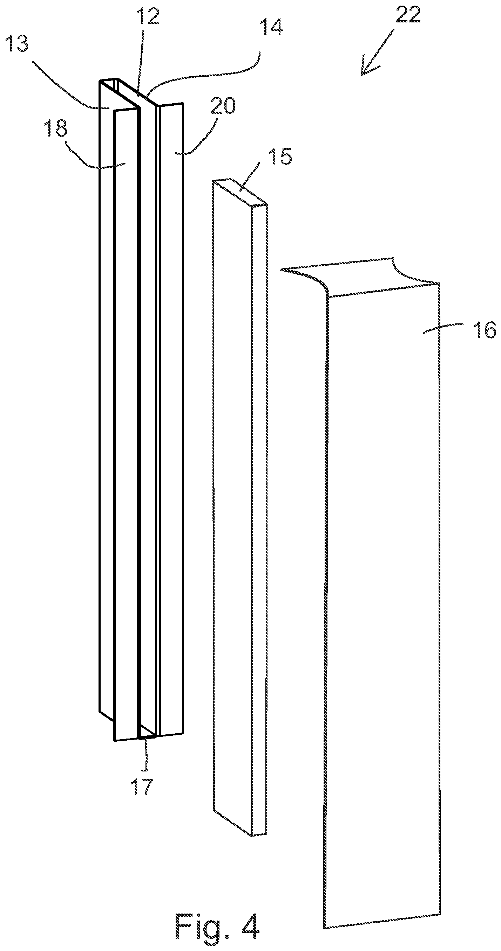

With reference to Figures 3 and 4, the sealing arrangement 22 comprises a refractory fabric 12 which is folded to a substantially U-form shape. In the folded shape the refractory fabric 12 has a first branch portion 13 and a second branch portion 14. The first branch portion 13 is attached with refractory glue to the first side edge 7 of the first contact shoe element 10. The second branch portion 14 is attached with refractory glue to the second side edge 8 of the second contact shoe element 11. A first edge portion 18 is folded from the first branch portion 13 and attached with refractory glue to the side face 9 of the first contact shoe element 10. A second edge portion 20 is folded from the second branch portion 14 to an opposite direction in relation to the first edge portion and attached with refractory glue to the side face 9 of the second contact shoe element 11. A refractory felt strip 15 is arranged between the first and second branch portions 13, 14 to fill the space therebetween. Finally, a cover strip 16 which is made of refractory fabric is attached with refractory glue to the side faces 9 of the first and second contact shoe element 10, 11.

As can be seen in Figure 4, the sealing arrangement 22 comprises a refractory bottom closure 17 connected at the lower ends of first and second branch portions 13, 14 to form a bottom support for the refractory felt strip 15.

The refractory fabric 12, the cover strip 16 and the bottom closure 17 may be made of ceramic fabric or quartz fiber fabric. The refractory felt strip 15 is ceramic felt.

The sealing arrangement 22 can be installed by a method wherein a planar sheet of refractory fabric 12 is bent over, i.e. the refractory fabric 12 is folded 180 degrees, to form a substantially U-form shape so that a first branch portion 13 and second branch portion 14 are formed. A refractory bottom closure 17 is connected at the lower ends of the first and second branch portions 13, 14 to form a bottom support for a refractory felt strip 15. A first edge portion 18 is folded 90 degrees from the first branch portion 13 around a first corner 19, which is the corner between the first side edge 7 and the side face 9 of the first contact shoe element 10. Similarly, a second edge portion 20 is folded 90 degrees from the second branch portion 14 around a second corner 21, which is the corner between the second side edge 8 and the side face 9 of the second contact shoe element 11, to an opposite direction in relation to the first edge portion. The first branch portion 13 is attached with refractory glue to the first side edge 7 of the first contact shoe element 10, the second branch portion 14 is attached with a refractory glue to the second side edge 8 of the second contact shoe element 11. Further, the first edge portion 18 is attached with refractory glue to said side face 9 of the first contact shoe element 10, and the second edge portion 20 is attached with refractory glue to said side face 9 of the second contact shoe element 11. One or more refractory felt strips 15 are inserted between the first and second branch portions 13, 14 to fill the space therebetween. A cover strip 16 made of refractory fabric is attached with a refractory glue to the side faces 9 of the first and second contact shoe elements 10, 11.

While the present invention has been described in connection with an exemplary embodiment and implementations, the present invention is not so limited, but rather covers various modifications and equivalent arrangements, which fall within the purview of the following claims.

## Claims

1. A method for sealing of gaps (1) in a contact shoe ring (2), said contact shoe ring being a subassembly of an electrode lower column assembly (3) of an electrode system (4) of an electric arc furnace (5), said electrode lower column assembly comprising said contact shoe ring and a pressure ring (6) which surrounds the contact shoe ring, and said contact shoe ring comprising contact shoe elements (10, 11), each having a first side edge (7), a second side edge (8) which is substantially parallel with the first side edge, and a side face (9) at the outer periphery facing the pressure ring, each of said gaps (1) being a space between the first side edge (7) of a first contact shoe element (10) and the second side edge (8) of a second contact shoe element (11) which is adjacently neighboring to the first contact shoe element, **characterized in that** the method comprises the steps of
- folding a refractory fabric (12) to a substantially U-form shape to form a first branch portion (13) and second branch portion (14) which is parallel and at a distance corresponding to the width of the gap in relation to the first branch portion,
- attaching the first branch portion (13) with a refractory glue to the first side edge (7) of the first contact shoe element (10),
- attaching the second branch portion (14) with a refractory glue to the second side edge (8) of the second contact shoe element (11),
- inserting at least one refractory felt strip (15) between the first and second branch portions (13, 14) to fill the space therebetween, and
- attaching a cover strip (16) made of refractory fabric with a refractory glue to the side faces (9) of the first and second contact shoe elements (10, 11).

2. The method according to claim 1, **characterized in that** the method comprises a step of arranging a refractory bottom closure (17) to connect the lower ends of the first and second branch portions (13, 14) to form a support for the refractory felt strip (15).

3. The method according to claim 1 or 2, **characterized in that** before attaching the cover strip (16) to the side faces (9) of the first and second contact shoe elements (10, 11), the method comprises steps of
- folding a first edge portion (18) from the first branch portion (13) around a first corner (19) which is the corner between the first side edge (7) and the side face (9) of the first contact shoe element (10) and attaching the first edge portion (18) with a refractory glue to said side face (9) of the first contact shoe element (10), and
- folding a second edge portion (20) from the second branch portion (14) around a second corner (21), which is the corner between the second side edge (8) and the side face (9) of the second contact shoe element (11), to an opposite direction in relation to the first edge portion and attaching the second edge portion (20) with a refractory glue to said side face (9) of the second contact shoe element (11).

4. A sealing arrangement (22) for sealing of gaps (1) in a contact shoe ring (2), said contact shoe ring being a subassembly of an electrode lower column assembly (3) of an electrode system (4) of an electric arc furnace (5), said electrode lower column assembly comprising said contact shoe ring and a pressure ring (6) which surrounds the contact shoe ring, and said contact shoe ring comprising contact shoe elements (10, 11), each having a first side edge (7), a second side edge (8) which is substantially parallel with the first side edge, and a side face (9) at the outer periphery facing the pressure ring, each of said gaps (1) being a space between the first side edge (7) of a first contact shoe element (10) and the second side edge (8) of a second contact shoe element (11) which is adjacently neighboring to the first contact shoe element, **characterized in that** the sealing arrangement (22) comprises
- a refractory fabric (12) which is folded to a substantially U-form shape having a first branch portion (13) to be attached in use with refractory glue to the first side edge (7) of the first contact shoe element (10) and a second branch portion (14) to be attached in use with refractory glue to the second side edge (8) of the second contact shoe element (11),
- at least one refractory felt strip (15) which is arranged between the first and second branch portions (13, 14) to fill the space therebetween, and
- a cover strip (16) made of refractory fabric attached with refractory glue to the side faces (9) of the first and second contact shoe element (10, 11).

5. The sealing arrangement according to claim 4, **characterized in that** the sealing arrangement (22) comprises a refractory bottom closure (17) connected at the lower ends of first and second branch portions (13, 14) to form a bottom support for the refractory felt strip (15).

6. The sealing arrangement according to claim 4 or 5, **characterized in that** the refractory fabric (12) comprises
a first edge portion (18) folded from the first branch portion (13) and attached with refractory glue to the side face (9) of the first contact shoe element (10), and
a second edge portion (20) folded from the second branch portion (14) to an opposite direction in relation to the first edge portion and attached with refractory glue to the side face (9) of the second contact shoe element (11).

7. The sealing arrangement according to any one of the claims 4 to 6, **characterized in that** the refractory fabric (12) and/or the cover strip (16) and/or the bottom closure (17) is ceramic fabric or quartz fiber fabric.

8. The sealing arrangement according to any one of the claims 4 to 7, **characterized in that** the refractory felt strip (15) is ceramic felt.

## Patentansprüche

1. Verfahren zum Abdichten von Spalten (1) in einem Kontaktschuhring (2), wobei der Kontaktschuhring eine Untereinheit einer unteren Säulenanordnung (3) einer Elektrode eines Elektrodensystems (4) eines Lichtbogenofens (5) ist, wobei die untere Säulenanordnung der Elektrode den Kontaktschuhring und einen Druckring (6) aufweist, der den Kontaktschuhring umgibt, und wobei der Kontaktschuhring Kontaktschuhelemente (10, 11) aufweist, die jeweils einen ersten Seitenrand (7), einen zweiten Seitenrand (8), der zu dem ersten Seitenrand im Wesentlichen parallel ist, und eine Seitenfläche (9) an dem Außenumfang aufweisen, der dem Druckring zugewandt ist, wobei jede der Spalten (1) ein Raum zwischen dem ersten Seitenrand (7) eines ersten Kontaktschuhelements (10) und dem zweiten Seitenrand (8) eines zweiten Kontaktschuhelements (11) ist, das angrenzend benachbart zu dem ersten Kontaktschuhelement ist, **dadurch gekennzeichnet, dass** das Verfahren folgende Schritte umfasst:
- Falten eines feuerfesten Gewebes (12) zu einer im Wesentlichen U-förmigen Gestalt, um einen ersten Zweigabschnitt (13) und einen zweiten Zweigabschnitt (14) zu bilden, der zu dem ersten Zweigabschnitt parallel und in einem Abstand verläuft, der der Breite des Spalts bezüglich des ersten Zweigabschnitt entspricht,
- Anbringen des ersten Zweigabschnitts (13) an dem ersten Seitenrand (7) des ersten Kontaktschuhelements (10) mittels eines feuerfesten Klebstoffs,
- Anbringen des zweiten Zweigabschnitts (14) an dem zweiten Seitenrand (8) des zweiten Kontaktschuhelements (11) mittels eines feuerfesten Klebstoffs,
- Einfügen wenigstens eines feuerfesten Filzstreifens (15) zwischen dem ersten und zweiten Zweigabschnitt (13, 14), um den Raum dazwischen zu füllen, und
- Anbringen eines Deckstreifens (16), der aus einem feuerfesten Gewebe hergestellt ist, mittels eines feuerfesten Klebstoffs an den Seitenflächen (9) des ersten und zweiten Kontaktschuhelements (10, 11).

2. Verfahren nach Anspruch 1, **dadurch gekennzeichnet, dass** das Verfahren einen Schritt des Anordnens eines feuerfesten Bodenabschlusses (17) umfasst, um die unteren Enden des ersten und zweiten Zweigabschnitts (13, 14) zu verbinden, um eine Stütze für den feuerfesten Filzstreifen (15) zu bilden.

3. Verfahren nach Anspruch 1 oder 2, **dadurch gekennzeichnet, dass** das Verfahren vor dem Anbringen des Deckstreifens (16) an den Seitenflächen (9) des ersten und zweiten Kontaktschuhelements (10, 11) folgende Schritte umfasst:
- Falten eines ersten Randabschnitts (18) anhand des ersten Zweigabschnitts (13) um eine erste Ecke (19), die die Ecke zwischen dem ersten Seitenrand (7) und der Seitenfläche (9) des ersten Kontaktschuhelements (10) ist, und Anbringen des ersten Randabschnitts (18) an der Seitenfläche (9) des ersten Kontaktschuhelements (10) mittels eines feuerfesten Klebstoffs, und
- Falten eines zweiten Randabschnitts (20) anhand des zweiten Zweigabschnitt (14) um eine zweite Ecke (21), die die Ecke zwischen dem zweiten Seitenrand (8) und der Seitenfläche (9) des zweiten Kontaktschuhelements (11) ist, in eine bezüglich des ersten Randabschnitts entgegengesetzte Richtung und Anbringen des zweiten Randabschnitts (20) mittels eines feuerfesten Klebstoffs an der Seitenfläche (9) des zweiten Kontaktschuhelements (11).

4. Dichtungseinrichtung (22) zum Abdichten von Spalten (1) in einem Kontaktschuhring (2), wobei der Kontaktschuhring eine Untereinheit einer unteren Säulenanordnung (3) einer Elektrode eines Elektrodensystems (4) eines Lichtbogenofens (5) ist, wobei die untere Säulenanordnung der Elektrode den Kontaktschuhring und einen Druckring (6) aufweist, der den Kontaktschuhring umgibt, und der Kontaktschuhring Kontaktschuhelemente (10, 11) aufweist, die jeweils einen ersten Seitenrand (7), einen zweiten Seitenrand (8), der im Wesentlichen parallel zu dem ersten Seitenrands ist, und eine Seitenfläche (9) an dem Außenumfang aufweisen, der dem Druckring zugewandt ist, wobei jeder der Spalte (1), ein Raum zwischen dem ersten Seitenrand (7) eines ersten Kontaktschuhelements (10) und des zweiten Seitenrands (8) eines zweiten Kontaktschuhelements (11) ist, das angrenzend benachbart zu dem ersten Kontaktschuhelement ist, **dadurch gekennzeichnet, dass** die Dichtungseinrichtung (22) enthält:
- ein feuerfestes Gewebe (12), das zu einer im Wesentlichen U-förmigen Gestalt gefaltet ist, die einen ersten Zweigabschnitt (13), der im Einsatz mittels feuerfestem Klebstoff an dem ersten Seitenrand (7) des ersten Kontaktschuhelements (10) anzubringen ist, und einen zweiten Zweigabschnitt (14) aufweist, der im Einsatz mittels feuerfestem Klebstoff an dem zweiten Seitenrand (8) des zweiten Kontaktschuhelements (11) anzubringen ist,
- wenigstens einen feuerfesten Filzstreifen (15), der zwischen dem ersten und zweiten Zweigabschnitt (13, 14) angeordnet ist, um den Raum dazwischen zu füllen, und
- einen Deckstreifen (16), der aus einem feuerfesten Gewebe hergestellt ist, das mit feuerfestem Klebstoff an den Seitenflächen (9) des ersten und zweiten Kontaktschuhelements (10, 11) angebracht ist.

5. Dichtungseinrichtung nach Anspruch 4, **dadurch gekennzeichnet, dass** die Dichtungseinrichtung (22) einen feuerfesten Bodenabschluss (17) aufweist, der an den unteren Enden des ersten und zweiten Zweigabschnitts (13, 14) angebracht ist, um eine Bodenstütze für den feuerfesten Filzstreifen (15) zu bilden.

6. Dichtungseinrichtung nach Anspruch 4 oder 5, **dadurch gekennzeichnet, dass** das feuerfeste Gewebe (12) aufweist:
einen ersten Randabschnitt (18), der anhand des ersten Zweigabschnitts (13) gefaltet ist und mittels feuerfestem Klebstoff an der Seitenfläche (9) des ersten Kontaktschuhelements (10) angebracht ist, und
einen zweiten Randabschnitt (20), der anhand des zweiten Zweigabschnitt (14) in eine bezüglich des ersten Randabschnitts entgegengesetzte Richtung gefaltet ist und mittels feuerfestem Klebstoff an der Seitenfläche (9) des zweiten Kontaktschuhelements (11) angebracht ist.

7. Dichtungseinrichtung nach einem beliebigen der Ansprüche 4 bis 6, **dadurch gekennzeichnet, dass** das feuerfeste Gewebe (12) und/oder der Deckstreifen (16) und/oder der Bodenabschluss (17) ein keramisches Gewebe oder ein Quarzfasergewebe ist.

8. Dichtungseinrichtung nach einem der Ansprüche 4 bis 7, **dadurch gekennzeichnet, dass** der feuerfeste Filzstreifen (15) ein Keramikfilz ist.

## Revendications

1. Procédé pour sceller des espaces (1) dans un anneau de frotteurs de contact (2), ledit anneau de frotteurs de contact étant un sous-ensemble d'un ensemble colonne inférieur d'électrode (3) d'un système (4) d'électrode d'un four à arc électrique (5), ledit ensemble colonne inférieur d'électrode comprenant ledit anneau de frotteurs de contact et un anneau de pression (6) qui entoure l'anneau de frotteurs de contact, et ledit anneau de frotteurs de contact comprenant des éléments frotteurs de contact (10, 11), chacun comportant un premier bord latéral (7), un second bord latéral (8) qui est sensiblement parallèle au premier bord latéral, et une face latérale (9) située au niveau de la périphérie extérieure faisant face à l'anneau de pression, chacun desdits espaces (1) étant un espace situé entre le premier bord latéral (7) d'un premier élément frotteur de contact (10) et le second bord latéral (8) d'un second élément frotteur de contact (11) qui se trouve au voisinage immédiat du premier élément frotteur de contact, **caractérisé en ce que** le procédé comprend les étapes consistant à
- plier une toile réfractaire (12) en une forme sensiblement en U pour former une première partie de dérivation (13) et une seconde partie de dérivation (14) qui est parallèle à la première partie de dérivation et qui se trouve à une distance correspondant à la largeur de l'espace,
- fixer la première partie de dérivation (13) au moyen d'une colle réfractaire au premier bord latéral (7) du premier élément frotteur de contact (10),
- fixer la seconde partie de dérivation (14) au moyen d'une colle réfractaire au second bord latéral (8) du second élément frotteur de contact (11),
- introduire au moins une bande de feutre réfractaire (15) entre les première et seconde parties de dérivation (13, 14) de façon à remplir l'espace qui les sépare, et
- fixer une bande de couverture (16) constituée de toile réfractaire au moyen d'une colle réfractaire aux faces latérales (9) des premier et second éléments frotteurs de contact (10, 11).

2. Procédé selon la revendication 1, **caractérisé en ce que** le procédé comprend une étape consistant à disposer une fermeture inférieure réfractaire (17) de façon à relier les extrémités inférieures des première et seconde parties de dérivation (13, 14) pour former un support destiné à la bande de feutre réfractaire (15).

3. Procédé selon la revendication 1 ou 2, **caractérisé en ce que**, avant de fixer la bande de couverture (16) aux faces latérales (9) des premier et second éléments frotteurs de contact (10, 11), le procédé comprend les étapes consistant à
- plier une première partie de bord (18) par rapport à la première partie de dérivation (13) autour d'un premier angle (19) qui est l'angle se trouvant entre le premier bord latéral (7) et la face latérale (9) du premier élément frotteur de contact (10) et fixer la première partie de bord (18) au moyen d'une colle réfractaire à ladite face latérale (9) du premier élément frotteur de contact (10), et
- plier une seconde partie de bord (20) par rapport à la seconde partie de dérivation (14) autour d'un second angle (21), qui est l'angle se trouvant entre le second bord latéral (8) et la face latérale (9) du second élément frotteur de contact (11), dans une direction opposée par rapport à la première partie de bord et fixer la seconde partie de bord (20) au moyen d'une colle réfractaire à ladite face latérale (9) du second élément frotteur de contact (11).

4. Agencement de scellement (22) permettant de sceller des espaces (1) d'un anneau de frotteurs de contact (2), ledit anneau de frotteurs de contact étant un sous-ensemble d'un ensemble colonne inférieur d'électrode (3) d'un système (4) d'électrode d'un four à arc électrique (5), ledit ensemble colonne inférieur d'électrode comprenant ledit anneau de frotteurs de contact et un anneau de pression (6) qui entoure l'anneau de frotteurs de contact, et ledit anneau de frotteurs de contact comprenant des éléments frotteurs de contact (10, 11), chacun comportant un premier bord latéral (7), un second bord latéral (8) qui est sensiblement parallèle au premier bord latéral, et une face latérale (9) située au niveau de la périphérie extérieure faisant face à l'anneau de pression, chacun desdits espaces (1) étant un espace situé entre le premier bord latéral (7) d'un premier élément frotteur de contact (10) et le second bord latéral (8) d'un second élément frotteur de contact (11) qui se trouve au voisinage immédiat du premier élément frotteur de contact, **caractérisé en ce que** l'agencement de scellement (22) comprend
- une toile réfractaire (12) qui est pliée en une forme sensiblement en U comportant une première partie de dérivation (13) à fixer, en utilisation, au moyen d'une colle réfractaire au premier bord latéral (7) du premier élément frotteur de contact (10) et une seconde partie de dérivation (14) à fixer, en utilisation, au moyen d'une colle réfractaire au second bord latéral (8) du second élément frotteur de contact (11),
- au moins une bande de feutre réfractaire (15) qui est disposée entre les première et seconde parties de dérivation (13, 14) de façon à remplir l'espace qui les sépare, et
- une bande de couverture (16) constituée d'une toile réfractaire fixée au moyen d'une colle réfractaire aux faces latérales (9) des premier et second éléments frotteurs de contact (10, 11).

5. Agencement de scellement selon la revendication 4, **caractérisé en ce que** l'agencement de scellement (22) comprend une fermeture inférieure réfractaire (17) reliée au niveau des extrémités inférieures des première et seconde parties de dérivation (13, 14) pour former un support inférieur destiné à la bande de feutre réfractaire (15) .

6. Agencement de scellement selon la revendication 4 ou 5, **caractérisé en ce que** la toile réfractaire (12) comprend
une première partie de bord (18) pliée par rapport à la première partie de dérivation (13) et fixée au moyen d'une colle réfractaire à la face latérale (9) du premier élément frotteur de contact (10), et
une seconde partie de bord (20) pliée par rapport à la seconde partie de dérivation (14) dans une direction opposée par rapport à la première partie de bord et fixée au moyen d'une colle réfractaire à la face latérale (9) du second élément frotteur de contact (11).

7. Agencement de scellement selon l'une quelconque des revendications 4 à 6, **caractérisé en ce que** la toile réfractaire (12) et/ou la bande de couverture (16) et/ou la fermeture inférieure (17) est une toile de céramique ou une toile de fibres de quartz.

8. Agencement de scellement selon l'une quelconque des revendications 4 à 7, **caractérisé en ce que** la bande de feutre réfractaire (15) est un feutre de céramique.
